# FASCICULE DE BREVET EUROPEEN

(11) **EP 1 709 279 B1**
(45) Date de publication et mention de la délivrance du brevet: **02.05.2007**
(21) Numéro de dépôt: 04805609.7
(22) Date de dépôt: 02.12.2004
(51) Int. Cl.: E06B 9/04, F24J 2/04

(54) **VOLET INTEGRANT UN CONVERTISSEUR SOLAIRE A AIR**
FENSTERLADEN MIT EINEM EINGEBAUTEN LUFT-SONNENENERGIE-UMWANDLER
SHUTTER COMPRISING A BUILT-IN AIR SOLAR CONVERTER

(30) Priorité: 04.12.2003 FR 0314260
(43) Date de publication de la demande: 11.10.2006
(73) Titulaire: Canaletti, Jean-Louis, 20000 Ajaccio (FR)
(72) Inventeur: Canaletti, Jean-Louis, 20000 Ajaccio (FR)
(74) Mandataire: Casalonga, Axel
(86) Numéro de dépôt international: PCT/FR2004/003089
(87) Numéro de publication internationale: WO 2005/056966

(56) Documents cités:
- DE-A- 3 005 809
- FR-A- 2 438 803
- FR-A- 2 467 961
- FR-A- 2 487 485
- FR-A- 2 501 839
- FR-A- 2 522 398

## Description

La présente invention a pour objet un volet pivotant pour bâtiment, intégrant un capteur solaire à air.

On connaît l'importance qu'il y a lieu d'attacher aux économies d'énergie, en particulier dans le bâtiment, pour chauffer des locaux d'habitation lorsque la température extérieure est insuffisante. On sait récupérer l'énergie solaire en utilisant des capteurs solaires généralement disposés sur la toiture des bâtiments et à l'intérieur desquels circule un fluide caloporteur qui peut ensuite être utilisé pour transmettre les calories à l'intérieur des locaux d'habitation.

On connaît également des convertisseurs solaires à air à l'intérieur desquels on provoque une circulation d'air froid qui se réchauffe grâce à l'énergie solaire traversant des panneaux translucides ou transparents qui réalisent un effet de serre.

Généralement, ces dispositifs convertisseurs ou capteurs solaires utilisés dans les bâtiments sont montés de manière fixe sur des éléments du bâtiment.

On connaît aussi du document FR 2 487 485 un volet pivotant qui comporte un capteur solaire avec une entrée d'air froid et un passage de circulation et d'échange thermique pour l'air.

La présente invention a pour objet d'augmenter l'efficacité de tels capteurs solaires et d'améliorer ainsi le rendement calorifique en termes de chauffage des locaux d'habitation intérieurs à un bâtiment.

A cet effet, la présente invention prévoit d'intégrer un capteur solaire à air dans un volet pivotant monté sur une façade d'un bâtiment.

Le volet pivotant pour bâtiment, selon l'invention, comprend un cadre rigide et peut occuper une position ouverte contre un mur du bâtiment et une position fermée devant une ouverture vitrée du bâtiment. Au moins un capteur solaire double face est monté dans le cadre rigide. Le capteur solaire comporte au moins une entrée d'air froid sur chacune de ses faces et au moins un passage de circulation et d'échange thermique pour l'air. Ledit passage communique avec un moyen flexible dirigeant l'air chaud vers l'intérieur du bâtiment. Le moyen flexible peut être réalisé sous la forme d'un tuyau flexible fixé par l'une de ses extrémités au volet et par son autre extrémité à un conduit fixe solidaire du bâtiment et débouchant à l'intérieur de celui-ci.

De cette manière, l'air froid pénétrant dans le capteur solaire est réchauffé et amené à l'intérieur du bâtiment quelle que soit la position du volet.

Dans un mode de réalisation préféré, le volet comprend en outre un ventilateur de mise en circulation de l'air, entraîné par un moteur électrique, et monté dans le cadre rigide. La circulation de l'air dans le capteur est ainsi améliorée

Le moteur électrique peut être alimenté en courant électrique par le secteur au moyen d'une connexion souple reliant le volet pivotant au bâtiment. Un transformateur peut être prévu si nécessaire. Selon une variante préférée, le moteur électrique peut être alimenté en courant électrique par au moins une paire de modules photovoltaïques montés dans le cadre rigide sur chacune des faces du volet. L'alimentation électrique est ainsi assurée quelle que soit la position du volet.

Dans un mode de réalisation avantageux, le capteur solaire double face comprend deux faces transparentes et deux éléments absorbeurs disposés à l'intérieur du capteur en regard des faces transparentes, l'ensemble définissant deux premiers passages d'air communiquant chacun avec l'une des entrées d'air suivis d'un deuxième passage d'air communiquant avec le moyen flexible par l'intermédiaire d'un collecteur.

Grâce à cette structure, les déperditions thermiques sont limitées, les flux d'air en circulation dans le capteur assurant une isolation thermique.

Les entrées d'air froid sont avantageusement disposées en partie basse du capteur et le collecteur en partie basse du cadre rigide.

Dans un mode de réalisation avantageux, un moyen est prévu pour maintenir sous tension mécanique le tuyau flexible quelle que soit la position du volet. De cette manière, le pivotement du volet n'affecte pas la forme du tuyau flexible qui joue toujours son rôle d'alimentation de l'intérieur du bâtiment en air chaud.

Le tuyau flexible peut par exemple être accroché à une extrémité d'un ressort fixé au conduit fixe, le tuyau flexible pouvant coulisser à l'intérieur d'une portion du conduit fixe.

Le tuyau flexible peut être accroché à une extrémité du ressort par l'intermédiaire d'une bague solidaire du tuyau flexible.

L'invention sera mieux comprise à l'étude d'un exemple non limitatif décrit en référence aux dessins annexés, sur lesquels :
- la figure 1 est une vue de face d'une fenêtre d'un bâtiment montrant deux volets pivotants en position fermée ;
- la figure 2 est une vue de face analogue à la figure 1, montrant la même fenêtre avec les deux volets pivotants en position ouverte ;
- la figure 3 est une vue schématique en coupe selon III-III de la figure 1, montrant la structure interne de l'un des volets ;
- la figure 4 est une vue schématique en coupe selon un plan horizontal, prise selon IV-IV de la figure 2 ;
- la figure 5 est une vue en coupe analogue à la figure 4, prise selon V-V de la figure 1 ; et

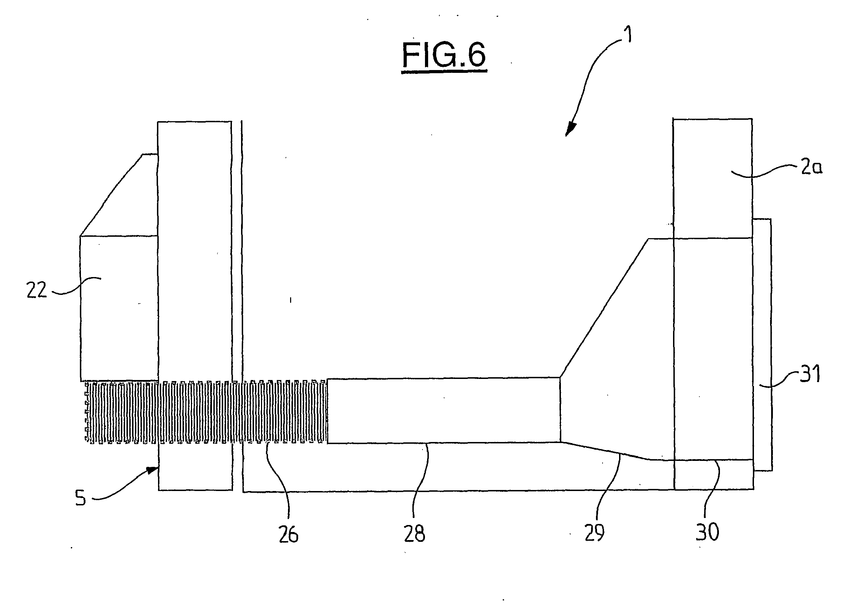

- la figure 6 est une vue extérieure prise selon F sur la figure 4.

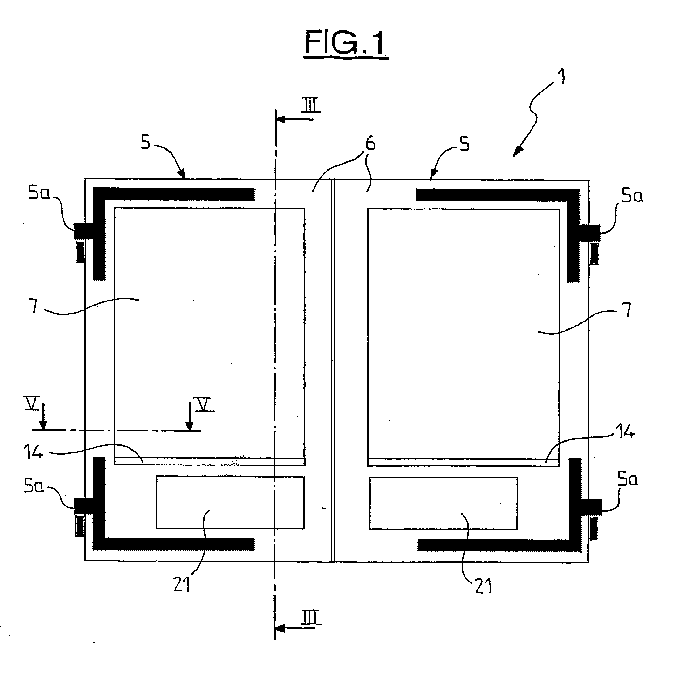

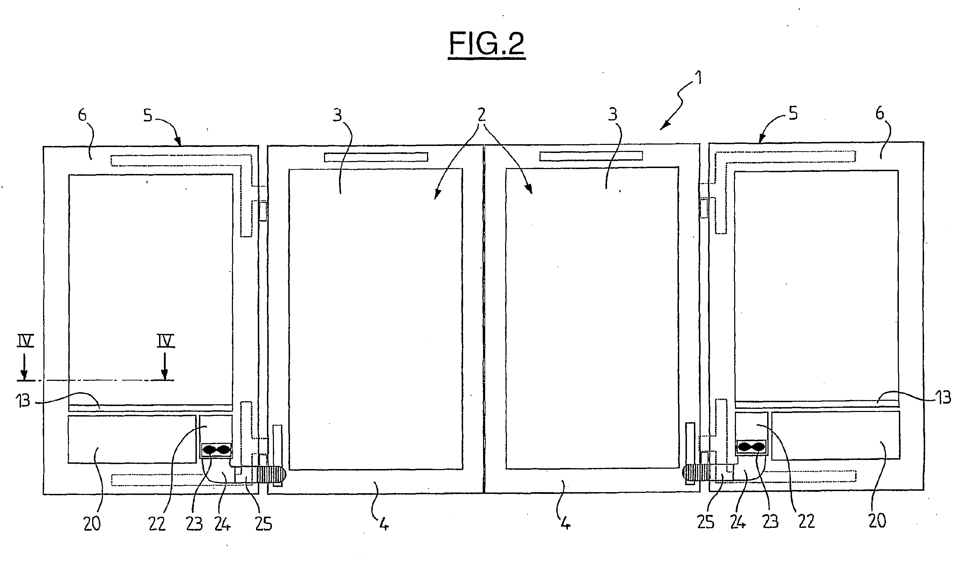

Dans l'exemple illustré sur les figures, la façade 1 d'un bâtiment présente une fenêtre double 2 comportant une partie vitrée 3 et un cadre rigide 4. Chacune des fenêtres 2 est équipée d'un volet pivotant 5 représenté en position fermée sur la figure 1 et en position ouverte sur la figure 2. Chacun des volets 5 peut ainsi occuper une position ouverte contre le mur de façade 1 du bâtiment (figure 2) et une position fermée devant l'ouverture vitrée (figure 1). Le pivotement des volets 5 est assuré par des charnières 5a. Chaque volet 5 comprend un cadre rigide 6 à l'intérieur duquel est monté un capteur solaire double face 7.

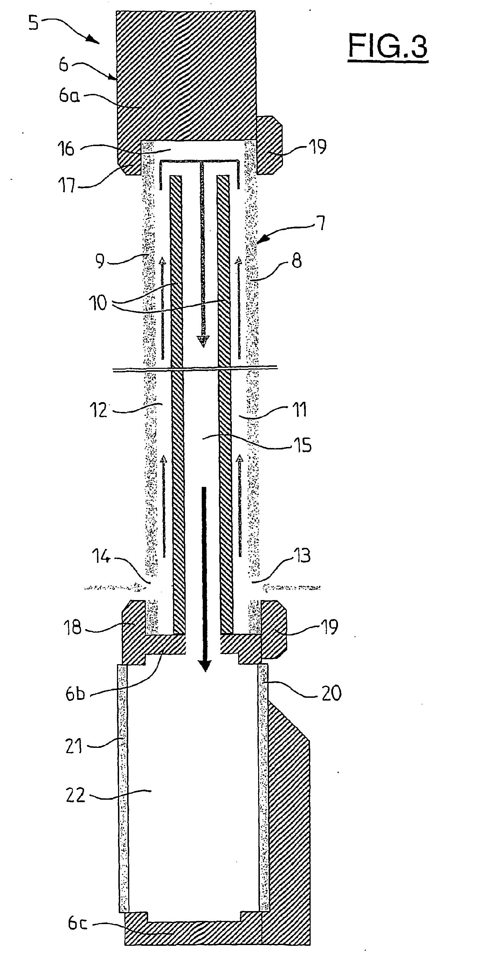

Comme on peut le voir sur la figure 3, le capteur solaire 7 présente deux faces transparentes 8, 9 réalisées en verre ou en matière synthétique, telle que du polycarbonate. La face transparente 8 se trouve, en position fermée du volet 5, vers l'intérieur du bâtiment, tandis que la face 9 se trouve vers l'extérieur. Entre les deux faces transparentes 8, 9 sont montés deux éléments absorbeurs 10, se présentant sous la forme de deux plaques métalliques munies d'un revêtement sombre, par exemple une peinture noire absorbant le rayonnement solaire.

Un intervalle est laissé libre entre la face intérieure 8 et l'un des éléments absorbeurs 10, de façon à définir un passage d'air ascendant 11. De la même manière, un intervalle est laissé entre la face externe 9 et l'élément absorbeur 10, de façon à définir un passage d'air ascendant 12. En partie basse de chacune des faces transparentes 8, 9, est pratiquée une entrée d'air froid sous la forme d'une fente 13, 14 occupant toute la largeur du capteur 5. En variante, les fentes 13, 14 pourraient être remplacées par des orifices individuels.

Entre les deux éléments absorbeurs 10, un intervalle est laissé libre de façon à définir un deuxième passage d'air 15, l'air se déplaçant vers le bas. Les deux passages d'air ascendants 11 et 12 communiquent en partie haute dans une zone de jonction 16 avec le passage descendant 15.

L'ensemble constitué par les faces transparentes 8, 9 et les deux éléments absorbeurs 10, est monté dans le cadre 6 entre le montant transversal supérieur 6a et un montant transversal intermédiaire 6b, par l'intermédiaire d'épaulements 17, 18 situés du côté extérieur. Du côté intérieur, le montage est complété par une pareclose 19.

Dans l'exemple illustré, deux modules photovoltaïques 20, 21, placés respectivement du côté intérieur et du côté extérieur, sont également intégrés à l'intérieur du cadre 6 du volet 5 entre le montant transversal inférieur 6c et le montant transversal intermédiaire 6b. Les deux modules photovoltaïques 20, 21 se présentent sous la forme de plaques minces occupant sur chacune des faces des volets 5 une partie de largeur inférieure à la largeur des capteurs solaires 7, comme on peut le voir sur les figures 1 et 2. L'écartement entre les deux modules photovoltaïques 20 et 21 définit une chambre collectrice ou collecteur 22 en communication avec le passage descendant 15 et recevant ainsi l'air chaud issu du capteur 7.

L'air chaud arrivant dans le collecteur 22 est repris par un ventilateur hélicoïdal 23, visible en particulier sur la figure 2 et monté sur le cadre rigide 6 de chaque volet 5 à côté du module photovoltaïque 20. La circulation d'air provoquée par le ventilateur 23 permet à l'air chaud de traverser un coude 24 avant d'être amené, par un élément rotatif 25, dans un tuyau flexible 26. Le tuyau flexible 26 est accroché par une bague de montage 26a à l'une des extrémités d'un ressort hélicoïdal 27 dont l'autre extrémité 27b est fixée sur un conduit fixe 28 placé horizontalement le long de l'épaisseur du mur de façade 1.

Du côté de l'intérieur du bâtiment, le conduit 28 comporte une portion élargie 29 qui traverse, par une portion 30, le bâti 2a de la fenêtre 2 avant de déboucher à l'intérieur du local d'habitation à travers un élément grillagé 31.

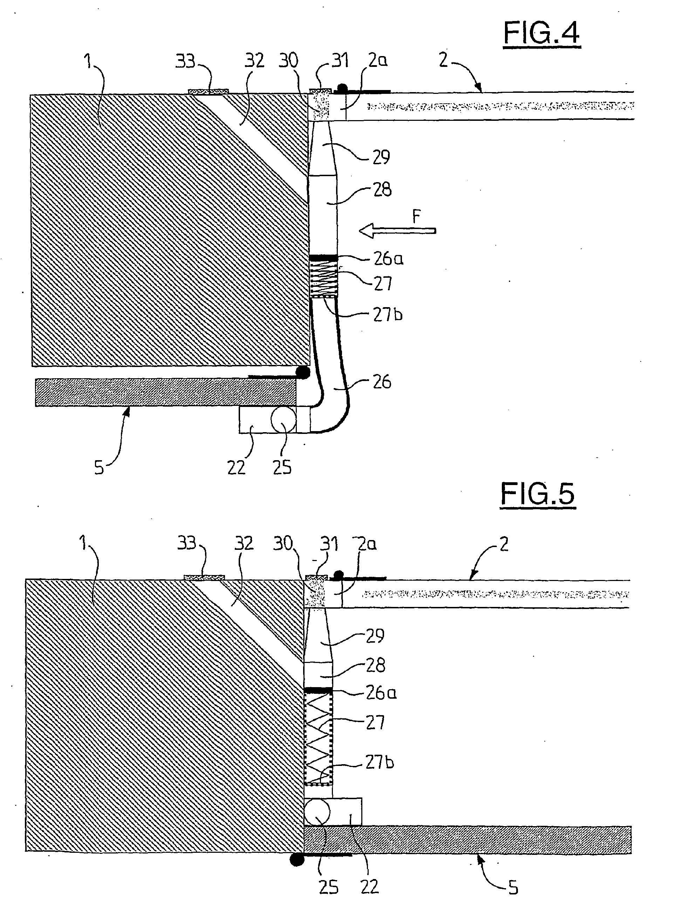

Sur les figures 4 et 5, on a représenté en outre une dérivation 32 du conduit 28, laquelle dérivation traverse l'épaisseur du mur 1 et débouche également par l'intermédiaire d'un élément grillagé 33 à l'intérieur du local réchauffé. On comprendra, bien entendu, que cette dérivation n'est pas indispensable. Par ailleurs, on peut également faire circuler la totalité de l'air chaud par une telle dérivation traversant le mur, en supprimant alors les parties 29 et 30 destinées à traverser le cadre 2a de la fenêtre 2. Bien entendu, la description ci-dessus est valable pour chacun des deux volets 5.

Le volet pivotant, selon l'invention, fonctionne de la manière suivante :

L'air froid pénètre par les fentes 13 et 14 et remonte par les passages ascendants 11 et 12 en se réchauffant au contact des deux absorbeurs 10. Les faces transparentes 8 et 9 réalisent un effet de serre. L'air circulant entre les entrées 13, 14 et la sortie d'air chaud dans le collecteur 22 s'échauffe lors d'un premier passage devant les deux faces transparentes 8, 9 du capteur double face. En réalité, suivant la position du volet 5, le rayonnement solaire pénètre par l'une des faces 8 ou 9 et l'air froid pénètre principalement par l'une des fentes 13 ou 14. L'échauffement de l'air est complété lors de sa circulation vers le bas à travers le passage descendant 15, entre les deux absorbeurs 10.

La circulation de l'air dans le capteur solaire est, dans l'exemple illustré, favorisée par le ventilateur 23 qui est entraîné par un moteur électrique, non représenté sur les figures, alimenté en énergie électrique par les modules photovoltaïques 20 et 21. Bien entendu, en variante, on pourrait alimenter en énergie électrique le ventilateur 23 par le courant du secteur, moyennant par exemple un transformateur et un circuit à découpage.

Le ventilateur 23 est alimenté en alternance par l'un ou l'autre des modules photovoltaïques 20, 21 selon que le volet 5 est en position ouverte ou en position fermée. De même, on comprend que grâce à la présente invention le capteur solaire double face travaille quelle que soit la position du volet. Enfin, l'absence d'isolation est compensée par la circulation de l'air de l'extérieur vers le coeur du capteur solaire double face, limitant ainsi au maximum les déperditions de chaleur par simple isolation due à l'écoulement de l'air.

Le ventilateur 23 de chaque volet est alimenté en alternance par l'un ou l'autre des modules photovoltaïques, assurant ainsi l'autonomie du volet et un débit d'air proportionnel à l'intensité du rayonnement solaire incident sur le module photovoltaïque concerné.

L'air réchauffé traverse ensuite l'élément rotatif 25 qui peut être avantageusement réalisé en matériau composite et le tuyau flexible 26. Le ressort 27 et la bague de montage 26a permettent l'emboîtement du tuyau flexible 26 à l'intérieur même du conduit fixe 28, en particulier dans la position fermée du volet, telle qu'illustrée sur la figure 5, où le ressort 27 est détendu. Dans la position ouverte du volet, telle qu'illustrée sur la figure 4, le ressort 27 est au contraire comprimé et le tube flexible 26 en majeure partie extrait du conduit fixe 28 par le pivotement du volet 5. Cette disposition, qui est particulièrement intéressante, permet une tension constante sur le tube flexible, quelle que soit la position du volet pivotant.

Grâce à la présente invention, il est possible de générer et de véhiculer de l'air chaud quelle que soit la position du volet. Le volet pivotant peut prendre toutes les positions possibles entre la position fermée et la position ouverte, sans que l'amenée d'air chaud à l'intérieur du local d'habitation soit modifiée ou que sa continuité soit interrompue.

Bien que la description ait été faite en relation avec un exemple de réalisation où le capteur solaire à air comprend deux passages ascendants et un passage descendant avec un collecteur en partie basse, on pourrait également envisager une variante avec un seul passage d'air dans le capteur, le collecteur pouvant alors être monté en position haute sur le volet.

Le volet pivotant selon l'invention peut être utilisé en toutes circonstances pour chauffer une pièce, un appartement ou toute autre habitation, en conservant toutes les fonctions premières d'un volet et, notamment dans le cas où il est équipé de modules photovoltaïques, sans aucune contrainte supplémentaire.

## Revendications

1. Volet pivotant pour bâtiment, pouvant occuper une position ouverte contre un mur du bâtiment et une position fermée devant une ouverture vitrée du bâtiment, comprenant un cadre rigide (6), **caractérisé par le fait qu'**au moins un capteur solaire double face (7) est monté dans le cadre rigide et comporte au moins une entrée d'air froid (13, 14) sur chacune de ses faces et au moins un passage de circulation et d'échange thermique pour l'air, ledit passage communiquant avec un moyen flexible dirigeant l'air chaud vers l'intérieur du bâtiment.

2. Volet selon la revendication 1, **caractérisé par le fait que** le moyen flexible est un tuyau flexible (26) fixé par l'une de ses extrémités au volet et par son autre extrémité à un conduit fixe (28) solidaire du bâtiment et débouchant à l'intérieur de celui-ci.

3. Volet selon les revendications 1 ou 2, **caractérisé par le fait qu'**il comprend un ventilateur (23) de mise en circulation de l'air, entraîné par un moteur électrique, et monté dans le cadre rigide (6).

4. Volet selon la revendication 3, **caractérisé par le fait que** le moteur électrique est alimenté en courant électrique par au moins une paire de modules photovoltaïques (20, 21) montés dans le cadre rigide (6) sur chacune des faces du volet.

5. Volet selon l'une quelconque des revendications précédentes, **caractérisé par le fait que** le capteur solaire double face (7) comprend deux faces transparentes (8, 9) et deux éléments absorbeurs (10) disposés à l'intérieur du capteur en regard des faces transparentes, l'ensemble définissant deux premiers passages d'air (11, 12) communiquant chacun avec l'une des entrées d'air suivis d'un deuxième passage d'air (15) communiquant avec le moyen flexible par l'intermédiaire d'un collecteur (22).

6. Volet selon la revendication 5, **caractérisé par le fait que** les entrées d'air froid (13, 14) sont disposées en partie basse du capteur et le collecteur en partie basse du cadre rigide.

7. Volet selon l'une quelconque des revendications 2 à 6, **caractérisé par le fait qu'**il comprend un moyen de maintien sous tension mécanique du tuyau flexible quelle que soit la position du volet.

8. Volet selon la revendication 7, **caractérisé par le fait que** le tuyau flexible est accroché à une extrémité d'un ressort (27) fixé au conduit fixe (28), le tuyau flexible pouvant coulisser à l'intérieur d'une portion du conduit fixe.

9. Volet selon la revendication 8, **caractérisé par le fait que** le tuyau flexible est accroché à une extrémité du ressort par l'intermédiaire d'une bague (26a) solidaire du tuyau flexible.

## Claims

1. Pivoting shutter for a building, capable of occupying an open position against a wall of the building and a closed position in front of a glazed opening of the building, comprising a rigid frame (6), **characterized in that** at least one double-faced solar collector (7) is mounted in the rigid frame and comprises at least one cold air inlet (13, 14) on each of its faces and at least one circulation and heat-exchange passageway for the air, the said passageway communicating with a flexible means directing the warm air towards the inside of the building.

2. Shutter according to Claim 1, **characterized in that** the flexible means is a flexible pipe (26) attached by one of its ends to the shutter and by its other end to a fixed duct (28) fixedly attached to the building and opening into the latter.

3. Shutter according to Claims 1 or 2, **characterized in that** it comprises a fan (23) for moving the air, driven by an electric motor, and mounted in the rigid frame (6).

4. Shutter according to Claim 3, **characterized in that** the electric motor is supplied with electric current by at least one pair of photovoltaic modules (20, 21) mounted in the rigid frame (6) on each of the faces of the shutter.

5. Shutter according to any one of the preceding claims, **characterized in that** the double-faced solar collector (7) comprises two transparent faces (8, 9) and two absorber elements (10) placed inside the collector opposite the transparent faces, the assembly defining two first air passageways (11, 12), each communicating with one of the air inlets, followed by a second air passageway (15) communicating with the flexible means via a manifold (22).

6. Shutter according to Claim 5, **characterized in that** the cold air inlets (13, 14) are placed in the bottom portion of the collector and the manifold in the bottom portion of the rigid frame.

7. Shutter according to any one of Claims 2 to 6, **characterized in that** it comprises a means for maintaining under mechanical tensioning the flexible pipe irrespective of the position of the shutter.

8. Shutter according to Claim 7, **characterized in that** the flexible pipe is coupled to one end of a spring (27) attached to the fixed duct (28), the flexible pipe being able to slide inside a portion of the fixed duct.

9. Shutter according to Claim 8, **characterized in that** the flexible pipe is attached to one end of the spring by means of a ring (26a) fixedly attached to the flexible pipe.

## Patentansprüche

1. Schwenkbarer Ladenflügel für ein Gebäude, der eine geöffnete Position gegen eine Mauer des Gebäudes und eine geschlossene Position vor einer verglasten Öffnung des Gebäudes einnehmen kann, mit einem starren Rahmen (6), **dadurch gekennzeichnet, dass** mindestens ein doppelseitiger Sonnenkollektor (7) im starren Rahmen angebracht ist und mindestens einen Kaltlufteinlass (13, 14) an jeder seiner Seiten und mindestens einen Zirkulations- und Wärmeaustauschdurchgang für die Luft aufweist, wobei der Durchgang mit einem Warmluft in das Innere des Gebäudes leitenden Mittel in Verbindung steht.

2. Ladenflügel nach Anspruch 1, **dadurch gekennzeichnet, dass** das flexible Mittel ein Schlauch (26) ist, der mit einem seiner Enden an dem Fensterladen und mit seinem anderen Ende an einer fest mit dem Gebäude verbundenen und in dessen Inneres mündenden feststehenden Leitung (28) angebracht ist.

3. Ladenflügel n nach Anspruch 1 oder 2, **dadurch gekennzeichnet, dass** er einen durch einen Elektromotor angetriebenen und im starren Rahmen (6) angebrachten Ventilator (23) zur Zirkulation der Luft aufweist.

4. Ladenflügel nach Anspruch 3, **dadurch gekennzeichnet, dass** der Elektromotor durch mindestens ein Paar photovoltaischer Module (20, 21), die an jeder der Seiten des Ladenflügels im starren Rahmen (6) angebracht sind, mit elektrischem Strom versorgt wird.

5. Ladenflügel nach einem der vorhergehenden Ansprüche, **dadurch gekennzeichnet, dass** der doppelseitige Sonnenkollektor (7) zwei durchsichtige Flächen (8, 9) und zwei Absorptionselemente (10) umfasst, die im Inneren der Solarzelle gegenüber den durchsichtigen Flächen angeordnet sind, wobei die Anordnung zwei erste Luftdurchgänge (11, 12), die jeweils mit einem der Lufteinlässe in Verbindung stehen, gefolgt von einem zweiten Luftdurchgang (15), der durch einen Sammler (22) mit dem flexiblen Mittel in Verbindung steht, definiert.

6. Ladenflügel nach Anspruch 5, **dadurch gekennzeichnet, dass** die Kaltlufteinlässe (13, 14) im unteren Teil des Sonnenkollektors angeordnet sind und der Sammler im unteren Teil des starren Rahmens angeordnet ist.

7. Ladenflügel nach einem der Ansprüche 2 bis 6, **dadurch gekennzeichnet, dass** er ein Mittel zum Halten des Schlauchs unter mechanischer Spannung unabhängig von der Position des Ladenflügels umfasst.

8. Ladenflügel nach Anspruch 7, **dadurch gekennzeichnet, dass** der Schlauch an einem Ende einer an der feststehenden Leitung (28) befestigten Feder (27) angebracht ist, wobei der Schlauch im Innern eines Teils der feststehenden Leitung gleiten kann.

9. Ladenflügel nach Anspruch 8, **dadurch gekennzeichnet, dass** der Schlauch durch einen fest mit dem Schlauch verbundenen Ring (26a) an einem Ende der Feder angebracht ist.
